(19) **Europäisches Patentamt / European Patent Office / Office européen des brevets**

(11) **EP 1 497 745 B1**

(12) **EUROPEAN PATENT SPECIFICATION**

(45) Date of publication and mention
of the grant of the patent:
**08.12.2010 Bulletin 2010/49**

(51) Int Cl.:
*G06F 15/80* (2006.01)    *H04L 12/56* (2006.01)
*H04L 29/06* (2006.01)

(21) Application number: **03746621.6**

(22) Date of filing: **08.04.2003**

(86) International application number:
**PCT/US2003/010545**

(87) International publication number:
**WO 2003/088072 (23.10.2003 Gazette 2003/43)**

(54) **Processing a packet using multiple pipelined processing modules**

Bearbeiten eines Pakets unter Verwendung mehrerer, als Pipeline angeordneter Bearbeitungsmodule

Traitement de paquet au moyen de modules de traitement pipelines multiples

(84) Designated Contracting States:
**AT BE BG CH CY CZ DE DK EE ES FI FR GB GR HU IE IT LI LU MC NL PT RO SE SI SK TR**

(30) Priority: **11.04.2002 US 120577**

(43) Date of publication of application:
**19.01.2005 Bulletin 2005/03**

(73) Proprietor: **HI/FN, Inc.**
**Los Gatos, CA 95032-7695 (US)**

(72) Inventors:
• **SAVARDA, Raymond**
  **Apex, NC 27502 (US)**
• **BLAKER, David**
  **Chapel Hill, NC 27516 (US)**
• **WINKELSTEIN, Dan**
  **Raleigh, NC 27603 (US)**

(74) Representative: **Boakes, Jason Carrington et al**
**Harrison Goddard Foote**
**106 Micklegate**
**York**
**YO1 6JX (GB)**

(56) References cited:
**EP-A- 1 107 517    WO-A-01/05086**
**WO-A-99/07180**

• **WU L ET AL: "CryptoManiac: a fast flexible architecture for secure communication" PROCEEDINGS OF THE 28TH. INTERNATIONAL SYMPOSIUM ON COMPUTER ARCHITECTURE. ISCA 2001. GOTEBORG, SWEDEN, JUNE 30 - JULY 4, 2001, INTERNATIONAL SYMPOSIUM ON COMPUTER ARCHITECTURE.(ISCA), LOS ALAMITOS, CA, IEEE COMP. SOC, US, 30 June 2001 (2001-06-30), pages 104-113, XP010553867 ISBN: 0-7695-1162-7**
• **"THE LAYERED APPROACH: THE OSI MODEL" DATA AND COMPUTER COMMUNICATIONS, XX, XX, 1991, pages 446-456, XP000917810**

**Description**

The present invention relates to packet processing methods, systems, and computer program products, and, more particularly, to methods, systems, and computer program products for processing packets in parallel.

Various techniques are known for processing data. For example XP 10553867 Wu L et al "Crypto Maniac: a fast flexible architecture for secure communication" 30 June 2001, pages 104-113 ISBN 0-7695-1162-7 and WO 01 05086 disclose systems for receiving and processing data packets.

The IP Security Protocol (IPSec) is a set of protocols developed by the Internet Engineering Task Force (IETF) to support the secure exchange of packets at the IP layer. IPSec has been widely used to implement virtual private networks (VPNs). IPSec supports two encryption modes: transport and tunnel. In transport mode only the data or payload portion of a packet is encrypted and the packet header is sent as clear text. In tunnel mode, both the packet header and the data/payload are encrypted. Sending and receiving devices use private keys to secure traffic therebetween. These keys along with security associations (SAs), which are unidirectional logical connections between two IPSec devices or systems, are negotiated by an Internet Key Exchange (IKE) function. An inbound SA may be uniquely identified by a Security Parameter Index (SPI), and IP destination address, and a security protocol. An outbound SA may be uniquely defined by a source IP address, a destination IP address, a protocol, a source port, and a destination port. To provide bi-directional communication, two SAs are typically defined, one in each direction.

IPSec systems manage SAs by maintaining two databases: a Security Policy Database (SPD) and a Security Association Database (SAD). The SPD specifies what security services are to be offered to the IP traffic. Typically, the SPD contains an ordered list of policy entries that are separate for inbound and outbound traffic. These policies may specify, for example, that some traffic must not go through IPSec processing, some traffic must be discarded, and some traffic must be IPSec processed.

The SAD contains parameter information about each SA. Such parameters may include the security protocol algorithms and keys for Authentication Header (AH) or Encapsulating Security Payload (ESP) security protocols, sequence numbers, protocol mode, and SA lifetime. For outbound packets, the SPD is consulted to determine if IPSec processing is required and/or if other processing or discarding of the packet is to be performed. If IPSec is required, then the outbound SAD is searched for an existing SA that matches the packet profile. If a SA is found or after negotiation of a SA, IPSec is applied to the packet as defined by the SA and the packet is delivered. For inbound packets, the inbound SAD can be directly consulted to determine if IPSec or other processing is required. If IPSec is required, then the SAD is searched for an existing security parameter index to match the security parameter index of the inbound packet. The SA is then used to process the packet by applying IPSec transforms to the inbound packet. A final check against inbound policy is made after inbound processing to verify the validity of the resulting packet.

Both IPSec processing and Secure Socket Layer (SSL) processing may, for example, require encryption and decryption of data as well as application of security policies to that data. Such security processing may adversely affect throughput of communications. For example, security processing may reduce the number of transactions an online banking system may receive in a given period of time. Similarly, throughput may be a concern in "real time" Internet applications, such as the transmission of video and/or audio. Provisioning of secure public VPNs for thousands of users may yield aggregate throughput requirements of many Gb/s. Emerging applications that also use IPSec for data confidentiality, like ISCSI, may have basic rquirements of 1 - 10 Gb/s based on Gb ethernet connectivity. Thus, it may be beneficial to provide dedicated processing capabilities to perform the complex tasks associated with encryption, which may improve the performance of IPSec processing and, thereby, improve throughput.

IPSec transforms may be applied to IP packets in various ways. One approach is based primarily on software. For example, dedicated software modules may be developed for execution on a workstation to implement the IP packet manipulations, encryption, and authentication operations associated with the IPSec protocol. This approach, however, may be limited in its performance as the system processor performs many or all of the functions. Encryption, decryption, and/or authentication are typically processor intensive. Performance for primarily software-based systems may be limited to approximately 20 - 30 Mbits/second or less.

Another approach that has been used is to add a bus-based cryptographic chip that communicates with the system processor to implement the IPSec protocol. The software running on the system processor may still be responsible for IPSec policy lookup, SA management, fragmentation, de-fragmentation, and header construction. The cryptographic chip may perform the encryption, decryption, and/or authentication transforms as required. After completion of the cryptographic operations, the system processor may further process the packet to finish any remaining IPSec transforms. Although these systems may provide improved performance over primarily software based systems, performance may still be limited due to the transform responsibilities still remaining with the system processor and/or the throughput limitations of the communication bus between the system processor and the cryptographic chip, and the multiple copies of the packet that may be required between the host processor memory and the cryptographic chip.

Yet another approach that has been used is to dedicate multiple processors to implement the IPSec protocol with each processor having its own set of one or more cryptographic chips on a private bus. This architecture may be viewed as an array of smaller IPSec subsystems that are controlled by an overall system processor that schedules the distribution of packets to and the collection of packets from the various subsystems. Unfortunately, such an architecture may use up valuable board space, increase the cost of the system, and increase power consumption due to the many embedded processors. The system processor may also be burdened with additional overhead in allocating packets to the IPSec subsystems and, potentially, managing multiple databases (*e.g.*, SA databases) associated with each subsystem. Overall latency may be no better than the latency of the worst performing IPSec subsystem.

It is an aim of the present invention to at least partly mitigate the above-mentioned problems.

According to a first aspect of the present invention there is provided a method of processing IPSec packets, comprising:

receiving the packets;

encapsulating each of the packets that does not have a packet header with a packet header;

processing the encapsulated packets based on information contained in the packet-object headers using a plurality of transform modules that are coupled to each other in a series configuration and that each have a specific individual function; and

providing the encapsulated packets in parallel to respective ones of the plurality of transform modules, wherein said processing comprises using said respective ones of the plurality of transform modules to process the encapsulated packets in parallel independent of other ones of the plurality of transform modules.

According to a second aspect of the present invention there is provided an IPSec packet processing system comprising:

a plurality of transform modules that are coupled to each other in a series configuration, each have a specific individual function, and are configured to receive a serial stream of packets that are each encapsulated with a packet header, respective ones of the plurality of transform modules being further configured to receive the encapsulated packets in parallel and to process the encapsulated packets in parallel independent of other ones of the plurality of transform modules based on information contained in the packet headers.

According to a third aspect of the present invention there is provided a computer program product for processing IPSec packets, comprising:

a computer readable program medium having computer readable program code embodied therein;

computer readable program code configured to receive the packets;

computer readable program code configured to encapsulate each of the packets that does not have a packet header with a packet header;

computer readable program code configured to process the encapsulated packets based on information contained in the packet headers using a plurality of transform modules that are coupled to each other in a series configuration and that each have a specific individual function; and

computer readable program code configured to provide the encapsulated packets in parallel to respective ones of the plurality of transform modules,

wherein the computer readable program code configured to process the encapsulated packets is configured to use said respective ones of the plurality of transform modules to process the encapsulated packets in parallel independent of other ones of the plurality of transform modules.

Other features of the present invention will be more readily understood from the following detailed description of specific embodiments thereof when read in conjunction with the accompanying drawings, in which:

**FIG. 1** illustrates a packet co-processor pipeline architecture in accordance with some embodiments of the present invention;

**FIG. 2** illustrates a packet-object header structure in accordance with some embodiments of the present invention;

**FIG. 3** illustrates a pipeline processing header for an outbound packet-object in accordance with some embodiments of the present invention;

**FIG. 4** illustrates a pipeline processing header for an inbound packet-object in accordance with some embodiments of the present invention;

**FIG. 5** is a flowchart that illustrates exemplary operations for processing a packet using multiple pipelined processing modules in accordance with some embodiments of the present invention; and

**FIG. 6** is a block diagram that illustrates a cryptographic transform module that may be used in the packet co-processor pipeline architecture of FIG. 1 in accordance with some embodiments of the present invention.

While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like reference numbers signify like elements throughout the description of the figures.

Embodiments of the present invention are described herein in the context of processing a packet. It will be understood that the term "packet" means a unit of information that may be transmitted electronically as a whole from one device to another. Accordingly, as used herein, the term "packet" may encompass such terms of art as "frame" or "message," which may also be used to refer to a unit of transmission.

The present invention may be embodied as systems, methods, and/or computer program products. Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

The present invention is described herein with reference to flowchart and/or block diagram illustrations of methods, systems, and computer program products in accordance with exemplary embodiments of the invention. It will be understood that each block of the flowchart and/or block diagram illustrations, and combinations of blocks in the flowchart and/or block diagram illustrations, may be implemented by computer program instructions and/or hardware operations. These computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions specified in the flowchart and/or block diagram block or blocks.

These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart and/or block diagram block or blocks.

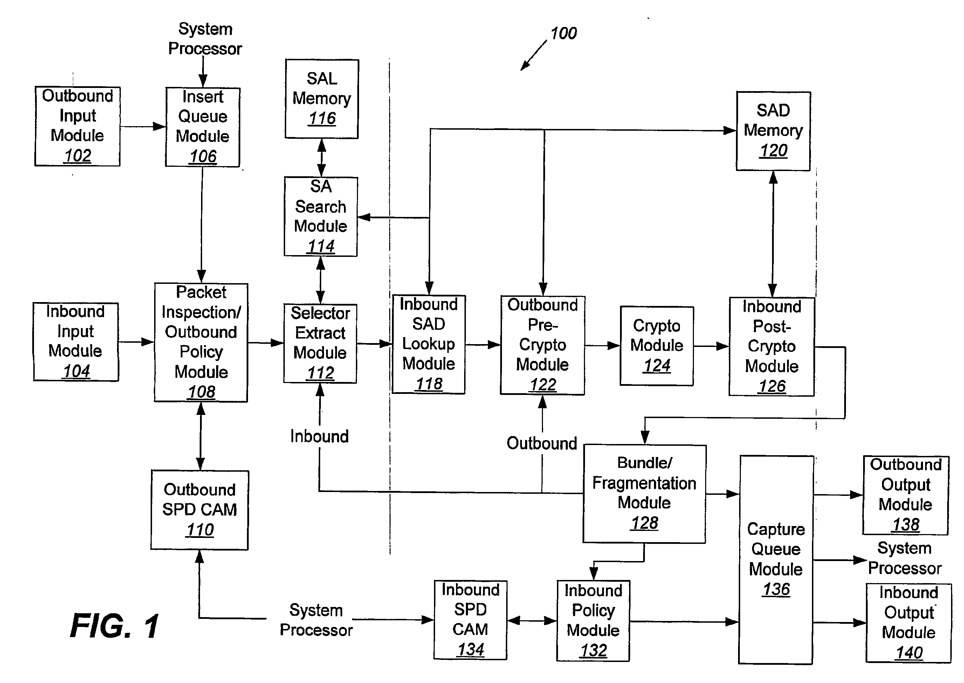

Referring now to **FIG. 1**, a packet co-processor **100** is illustrated that may communicate with a system processor to implement, for example, the IPSec protocol, in accordance with some embodiments of the present invention. In particular, the packet co-processor **100** may be dedicated to performing the packet transforms and cryptographic operations associated with the IPSec protocol. As shown in **FIG. 1,** the packet co-processor **100** comprises a plurality of transform modules that are coupled to each other in a series configuration.

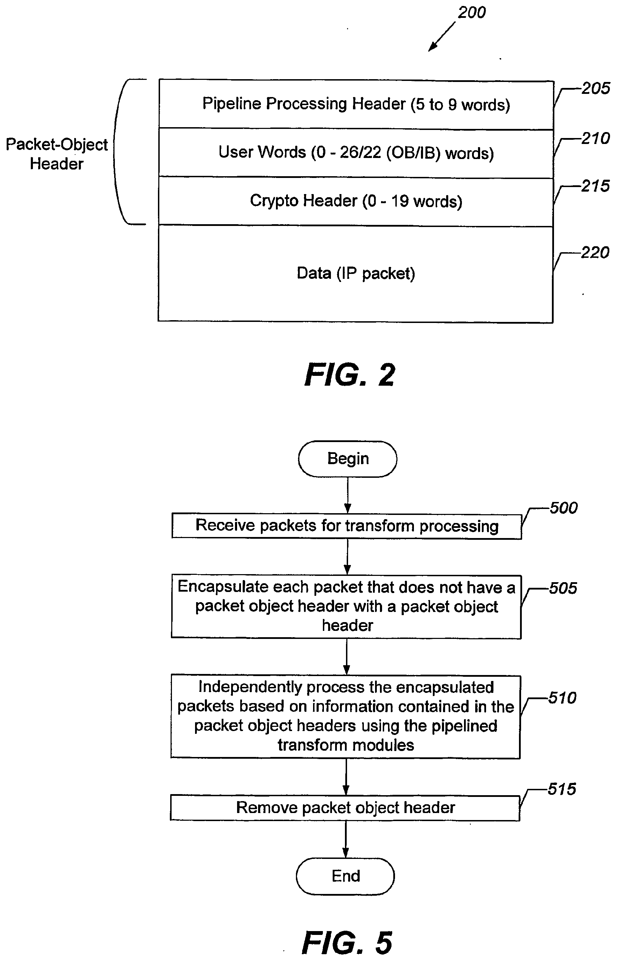

In some embodiments of the present invention, parallel processing may be furthered through the encapsulation of an IP packet with its associated context information. Such an encapsulation is illustrated in **FIG. 2** with respect to an encapsulated IP packet, which may be called a packet-object **200**. The packet-object **200** includes a packet-object header, which comprises a pipeline processing header **205,** user words **210,** a crypto header **215,** and data **220.** Packet-objects **200** may traverse the pipelined transform modules of the packet co-processor **100** of **FIG. 1,** which may provide parallelism in the sequential operations performed on the core IP packets to implement packet transformations required by standard security protocols, such as IPSec or SSL.

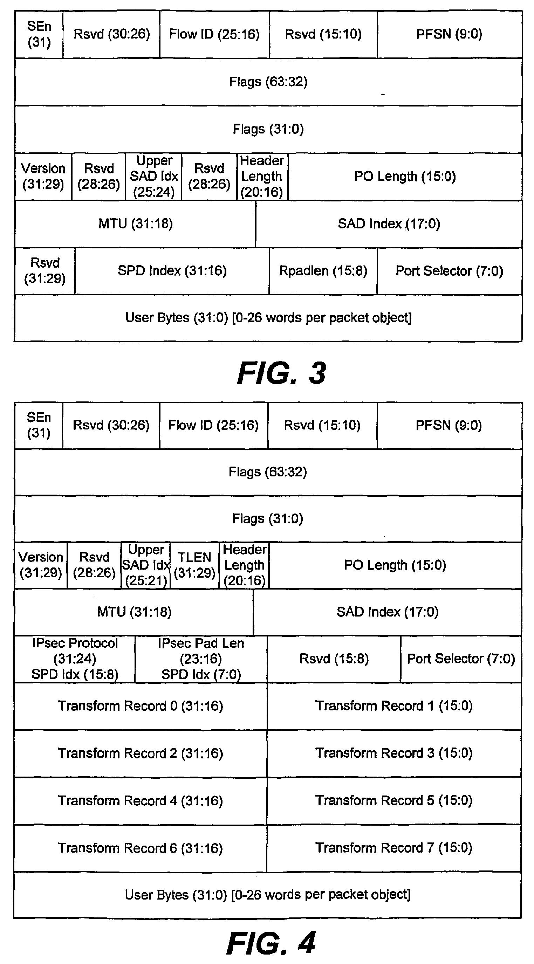

In more detail, the pipeline processing header **205** comprises action, routing, error, and informational fields and is the first portion of the packet-object that is available at each transform module in the packet co-processor **100** pipeline. This may allow fast determination of the correct processing to perform while the rest of the packet is being received at the respective transform module. **FIGS. 3** and **4** illustrate exemplary pipeline processing header **205** formats for outbound and inbound packet-objects, respectively. The user words **210** field is an optional field that may be used to carry information transparently through the packet co-processor **100** pipeline. The crypto header **215** field may comprise the cryptographic (crypto) information used by the crypto transform module in the packet co-processor **100** pipeline to perform encryption, decryption, and/or authentication transforms on the IP packets carried in packet-objects. The data **220** may comprise a formatted IP packet, which may include, but is not limited to, an authentication header (AH), an encapsulating security payload (ESP), AH authentication data, ESP authentication data, and a UDP or TCP payload.

Referring now to **FIG. 5,** exemplary operations of the packet co-processor **100** pipeline may be broadly described as receiving packets for transform processing (block **500**), encapsulating each of the packets that does not have a packet-object header with a packet-object header (block **505**), and independently processing the encapsulated packets based on information contained in the packet-object headers using a plurality of transform modules that are coupled to each other in a series or pipeline configuration (block **510**). The packet object-object header may then be removed for further processing of the encapsulated packet (block **515**).

Returning to **FIG. 1**, the packet co-processor **100** transform modules and exemplary operations thereof, in accordance with some embodiments of the present invention, will now be described in detail. The packet co-processor **100** may be configured to process both outbound and inbound packet streams. An outbound input module **102** may be configured to receive an outbound packet stream and an inbound input module **104** may be configured to receive an inbound packet stream. Both the outbound input module **102** and the inbound input module **104** may be configured to perform the low-level interface protocol adaptation between, for example, a framer and the packet co-processor **100**.

The outbound and inbound input modules **102** and **104** may be further configured to add a packet-object header (see **FIGS. 2, 3,** and **4**) to the packet to create a packet-object if the packet does not have a packet-object header, to determine how the packet should be routed through the packet co-processor **100,** and to update the flags and packet-object length (PO length) in the pipeline processing header **205**. A packet-object may be routed in three different ways as follows: 1) the packet-object may be routed through the packet co-processor **100** as an IP packet with all appropriate IPSec transforms applied thereto; 2) the packet-object may be captured to the system control processor, and 3) the packet-object may be passed through the packet co-processor **100** as a non-IP packet without any IP processing or IPSec transforms applied. Flags may be set in the pipeline processing header **205** to indicate how the packet is to be routed through the packet co-processor **100.** Note that the outbound and inbound input modules **102** and **104** may also discard or reject a packet-object, if, for example, the packet contains errors, is improperly formatted, or is associated with a non-supported protocol.

The insert queue module **106** is coupled to the system processor over a communication bus and may be configured with a FIFO memory and multiplexing circuitry to allow the system processor to insert inbound and/or outbound packets into the processing pipeline even in the case of a continuous packet stream input to the processing pipeline.

The packet inspection/outbound policy module **108** may be configured with multiplexing circuitry to integrate the outbound and inbound packet streams into a single stream for pipeline processing in the packet co-processor **100**. In addition, the packet inspection/outbound policy module **108** may be further configured to inspect packet-objects to ensure their integrity. For example, routing flags in the pipeline processing header **205** may be checked to determine if the packet-object should be captured by the control processor, passed through the packet co-processor **100** as a non-IP packet, or discarded. If the routing flags indicate that the packet-object is to be captured, passed through, or discarded, then the packet-object will not be processed by any subsequent transform modules in the packet co-processor **100.** Additional checks may be performed on the packet-object, such as, but not limited to, verifying that the packet-object length is greater than or equal to a minimum length (*e.g.*, the minimum size of a packet-object header is 20 bytes and the minimum size of a packet-object carrying an IP packet is 40 bytes), verifying that the data field **220** is greater than or equal to a minimum length (*e.g.*, 20 bytes for an IP packet), verifying that the IP header checksum is correct, verifying that the IP version number is correct, verifying that the IP header length field is $\geq$ 20 bytes (five 32-bit words), verifying that the IP length field (bytes) is 4 * IP header length field, and/or verifying that the IP length field is correct.

If any of the foregoing checks finds an error, then an error flag is set in the pipeline processing header **205** and the packet-object is not operated on by any subsequent transform modules in the packet co-processor. Instead, the packet-object is placed in the capture buffer of either the outbound output module **138** or the inbound output module **140** for error handling by the system processor.

The packet inspection/outbound policy module **108** may be further configured to determine if an outbound packet-object has a policy associated therewith. Specifically, the packet inspection/outbound policy module **108** may extract selectors from the outermost IP header of an outbound packet-object and use these selectors to perform a security policy lookup in the outbound SPD content addressable memory (CAM) **110**. In accordance with some embodiments of the present invention, the selectors may comprise a source IP address, a destination IP address, a protocol, a source TCP/UDP port, a destination TCP/UDP port, and an interface port (*i.e.,* the port selector field in the pipeline processing header, which is inserted by either the outbound input module **102** or the inbound input module **104**). In some embodiments of the present invention, the protocol used for SPD and SA lookup must be a transport protocol. Therefore, if the protocol is determined to be IP in IP (encapsulation), AH (authentication header for IP Version 6), IP Mobility, or IPComp (IP Payload

Compression Protocol), then the packet inspection/outbound policy module **108** parses down to the next inner IP header to analyze that header, recursively, until the transport protocol is obtained in accordance with the IPSec specification. In some embodiments, the IP headers will be parsed down through four levels. If a transport protocol is not found within four levels, then a no transport protocol error flag and a capture routing flag may be set in the pipeline processing header **205** to direct the packet-object to the system processor for error handling.

If a policy is found in the outbound SPD CAM **110,** then the policy index (i.e., SPD index) and the capture, discard, pass through, IKE, and control port flags are copied into the pipeline processing header **205**. If a policy is not found, then a no security policy match flag along with a capture flag is set in the pipeline processing header **205** to inform the control processor that the present packet-object is non-compliant. The SPD CAM **110** may be populated by the system processor based on security policies defined by a system operator or via an automated policy manager that can communicate with the system processor.

For inbound packet-objects, the packet inspection/outbound policy module 108 may be configured to determine if the packet-object is to be subject to IPSec transforms by examining the IP header protocol field. If the IP header protocol field is ESP or AH, then the destination IP address is compared with valid destination IP addresses stored, for example, in a binary CAM. If the inbound packet-object is not ESP or AH or the destination IP address is invalid, then a routing flag is updated in the pipeline processing header **205** to mark this packet-object for pass through treatment to the inbound policy module **132** where it may be passed through to the inbound output module **140** or discarded.

The selector extract module **112** may be configured to extract selectors from a packet-object and to pass these selectors along with the SPD index (see **FIGS. 3** and **4**) from the pipeline processing header **205** to the SA search module **114** to obtain an SAD index. While the SA search module **114** is attempting to obtain the SAD index from the SA Lookup (SAL) memory **116,** the selector extract module **112** may complete the reading in of the packet-object. Once the SAD index is obtained, the selector extract module **112** may release the packet-object to the inbound SAD lookup module **118** while simultaneously receiving another packet-object at its input port.

In more detail, for outbound packet-objects, the selector extract module **112** may be configured to extract the same selectors as are extracted by the packet inspection/outbound policy module **108** for obtaining the policy index from the outbound SPD CAM **110.** Those selectors, along with the policy index, are passed to the SA search module **114** for obtaining the SAD index from the SAL memory **116.** For inbound packet-objects, if the IP header protocol field is not ESP or AH (*i.e.,* the packet-object is not subject to IPSec transforms) or if the capture, pass through or discard flags are set in the pipeline processing header **205,** then the packet-object is not processed by the selector extract module **112.** Otherwise, selectors are extracted from the inbound packet-object and these selectors are passed to the SA search module **114** for obtaining the SAD index from the SAL memory **116.** In accordance with some embodiments of the present invention, the selectors for the inbound packet-object may comprise a destination IP address, a protocol, a SPI (from IP packet, ESP, or AH header), and an interface port (*i.e.*, the port selector field in the pipeline processing header, which is inserted by the inbound input module **104**).

The SA search module **114** accepts the selectors and policy index from the selector extract module **112** and looks up the SAD index in the SAL memory **116.** The SA search module **114** returns either the SAD index or an indication of invalid security policy or security association not found. If a SAD index is not returned, then the selector extract module **112** may set a SA lookup error flag in the pipeline processing header **205.**

In some embodiments of the present invention, the policy index may be used to retrieve an SA mask record from an SA mask table in the SAL memory **116.** This mask may be ANDed with the selectors for an outbound packet-object before the selectors are used to generate a hash value for obtaining the SAD index. The SA search module **114** may be configured to implement a hash-based search method to obtain the SAD index from the SAL memory **116.** In particular embodiments, the SA search module generates a hash value to derive a starting location within a table (database) in the SAL memory. A linear search is then used to find an SA record that matches the packet-object. The hash values may be calculated as follows:

$$\text{Inbound hash value} = (\text{SPI} * 383 + \text{Dest} * 257 + \text{Prot} * 7919 + \text{Intf} * 6143) \, \%M$$

$$\text{Outbound hash value} = (\text{Src} * 383 + \text{Dest} * 257 + \text{Prot} * 7919 + \text{Src\_port} * 2017 +$$
$$\text{Dest\_port} * 1031 + \text{Intf} * 6143) \, \%M$$

The value $M = 2^{23} - 15 = 8388593$. The hash values are reduced to the maximum number of SAs supported by the packet co-processor **100.** Exemplary linear search operations of the SAL memory **116** are described in U. S. Patent Application No. 09/845,432, entitled *Hash-Ordered Databases and Methods, Systems and Computer Program Products for Use of a Hash-Ordered Database,* the disclosure of which is hereby incorporated herein by reference.

Each entry in the SA lookup database may comprise a policy number, a masked transport protocol, a masked source IP address, a masked destination IP address, a masked source TCP/UDP port, and a masked destination TCP/UDP port. Associated with each SA lookup entry is a hash key/SA index field. This data may be physically stored at a location that is equal to the address at which the hashed selectors matched divided by two. The hash key/SA index field may comprise an allow fragment flag, a hash key value, and the SA index for the SAD database. The hash key value corresponds to the hash value generated from the selectors. The SA index is the pointer to the location of the keys, outer IP header, lifetime counts, and other information in the SAD database associated with this SA.

The inbound SAD lookup module **118** may be configured to use the SAD index obtained by the SA search module **114** to obtain the SAD record in the SAD memory that corresponds to the SAD index. The cryptographic information from the SAD record may be stored in the crypto header **215** of the packet-object. This cryptographic information may include sequencing information that is used during cryptographic processing. In some embodiments, the inbound SAD lookup module **118** may determine whether packet fragments are received and whether defragmentation will be applied based on flags set in the pipeline processing header **205**. If the IPSec protocol field or the IPSec mode flag in the pipeline processing header **205** is not ESP or AH (*i.e.,* the packet-object is not subject to IPSec transforms) or if the capture, pass through or discard flags are set in the pipeline processing header **205,** then the packet-object is not processed by the inbound SAD lookup module **118.**

The outbound pre-crypto module **122** may be configured to handle time-to-live (TTL) decrement operations, pre-cryptographic fragmentation, and insertion of IPSec information into the crypto header **215.** In more detail, the outbound pre-crypto module **122** may check a forwarded flag in the pipeline processing header **205** to determine whether a packet-object originates with the present gateway or has been forwarded from another gateway. If the packet-object has been forwarded, then the TTL value in the IP header is decremented. If the TTL value is 0 or -1, then the capture flag and TTL zero error flags are set in the pipeline processing header **205** so that the system processor is instructed to capture the packet-object for further processing.

The outbound pre-crypto module **122** may be further configured to handle pre-cryptographic fragmentation of an outbound packet-object. To determine how to fragment a packet-object, the outbound pre-crypto module **122** obtains the maximum transmission unit (MTU) size, mode (transport/tunnel), and protocol type (ESP/AH) from the SAD database in the SAD memory **120.** The proper offset may be derived by adding a fixed value to the SAD index. The MTU field in the pipeline processing header **205** is updated based on the MTU size read from the SAD database. Based on the foregoing information obtained from the SAD database, the outbound pre-crypto module **122** may fragment the packet-object into chunks before additional IPSec headers are added to the packet-object. Packet-objects associated with a tunnel mode IPSec packet may be fragmented prior to encryption. If the SA is associated with transport mode, clear text, or a policy that requires TCP/UDP port numbers, then the allow fragment flag in the pipeline processing header **205** is cleared to prevent pre-encryption fragmentation. If the SA is associated with a SA bundle, then the allow fragment flag only applies to the first SA in the bundle. Fragmentation results in multiple new packet-objects, in accordance with some embodiments of the present invention, with a per-fragment size set by the MTU field in the pipeline processing header **205.**

The outbound pre-crypto module **122** may be further configured to insert the IPSec header information into the outbound packet-object. In particular, the SAD database in the SAD memory **120** contains the actual information about how to process the packet-object. The outbound pre-crypto module **122** may obtain the keys (encryption and authentication), sequence number, and outer IP header (for tunnel mode) from the SAD database. This information may be formatted in various ways, in accordance with some embodiments of the present invention, such as ESP tunnel mode, AH tunnel mode, clear text, ESP transport mode, AH transport mode, and IPCOMP. The cryptographic information may be stored in the crypto header **215** of the packet-object. The outer IP header for tunnel mode may be inserted before the original IP header. The remaining information obtained from the SAD database may be stored in various fields in the packet-object. The sequence number, initial vector, byte lifetimes, packet count, and user data count may be updated in the SAD database. A determination may also be made whether the packet-object has exceeded the byte or time lifetimes. Padding may be added to the end of ESP packets. When using ESP encryption, the initial vector may be calculated using a 64-bit linear feedback shift register with a polynomial of $x^{64} + x^4 + x^3 + x + 1$. Each time a packet-object is processed, the initial vector is included in the packet-object header.

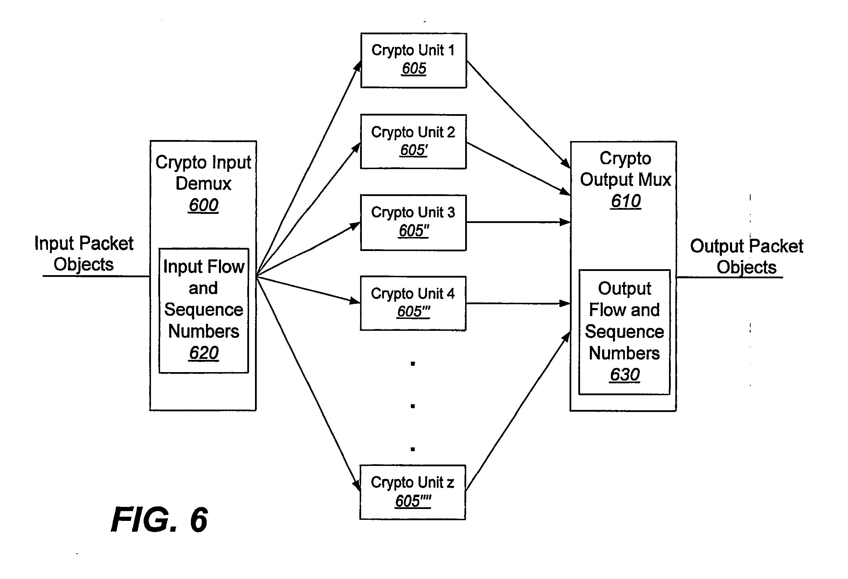

**FIG. 6** illustrates some embodiments of the crypto module **124** in accordance with the present invention. A packet-input demultiplexer (demux), illustrated as the crypto-demux **600,** receives an input stream of cryptographic packets. The input stream of cryptographic packets may be outbound and/or inbound packet-objects. The demux 600 receives the serial stream of packet-objects and multiplexes them to a plurality of cryptographic processing units (crypto-units) **605, 605', 605", 605''',** and **605''''.** The crypto-units **605, 605', 605", 605''',** and **605''''** may be any form of cryptographic processor capable of carrying out the operations described herein and may be all the same or may differ. For example, the crypto-units **605, 605', 605", 605''',** and **605''''** illustrated in **FIG. 6** may have differing processing capabilities, may have differing processing speeds, and/or may be multiple processors of the same type. In particular embodiments of the present invention, the crypto-units **605, 605', 605", 605'",** and **605""** may support 3DES, AES, SHA-1, and/or MD5 cryptographic processing. Furthermore, while **FIG. 6** illustrates cryptographic processing embodiments of the present invention, other packet transformation operations may also be performed in such a parallel system. Thus, the crypto-units **605, 605', 605", 605'",** and **605""** illustrated in **FIG. 6** may be replaced by other packet transform processors, such as compression processors or the like, which may be utilized in particular embodiments of the present invention.

The crypto-input demux **600** may provide the packet-objects to the crypto-units **605, 605', 605", 605'",** and **605""** on a round-robin basis, based on the processing characteristic of a particular one of the crypto-units **605, 605', 605", 605'",** and **605""** to balance workload or based on other criteria for distribution of packets to the crypto-units **605, 605', 605", 605'",** and **605""**. After processing, the crypto-units **605, 605', 605", 605'",** and **605""** provide the processed packet-objects to the packet-output multiplexer (mux), illustrated as the crypto-output mux **610.** The crypto-output mux **610** re-orders the packet-objects from the crypto-units **605, 605', 605", 605'",** and **605""** so as to provide output packet-objects in a serial stream.

The crypto-input demux **600** also assigns a sequence identifier and maintains an identification of a current sequence identifier to assign to a next received packet-object. In particular embodiments of the present invention, sequence identifiers are assigned to related packets so as to define an order of the related packets. In some embodiments illustrated in **FIG. 1,** the related packets are identified as a "flow" such that an input flow identifier and a sequence number are associated with each received packet and the current sequence number for a given flow is maintained in the input flow and sequence number table **620.** As described above, input packet-objects may be characterized as either an inbound or outbound packet. Similarly, flows of inbound packets may be referred to as inbound flows and flows of outbound packets may be referred to as outbound flows.

The crypto-output mux **610** receives the processed packets from the crypto-units **605, 605', 605", 605'",** and **605""** based on the sequence identifier of the processed packet-object. For embodiments of the present invention using a flow identifier, which is stored in the pipeline processing header **605,** as between packets from different flows, the crypto-output mux **610** may accept packet-objects for output based on a round-robin distribution scheme, based on a fairness scheme, or based on crypto history so as to ensure that packets are not "stuck" in the crypto-units **605, 605', 605", 605'",** and **605""**. By accepting for output the packet-objects in a sequence identifier order, the crypto-output mux **610** outputs the packets in sequence order and, thus, parallel processing of the packets may be accomplished while maintaining the sequence of the packets so that they do not require re-ordering.

The crypto-output mux **610** maintains a next sequence identifier in the sequence to compare the stored next sequence identifier with a sequence identifier of a processed packet-object to determine if the processed packet-object is the next packet in the sequence of packet-objects. In particular embodiments of the present invention where sequence identifiers are assigned to related packet-objects to define an order of the related packet-objects, a sequence identifier is defined for each of the different related packet-objects. In some embodiments illustrated in **FIG. 6**, the related packet-objects are identified as a flow such that a flow identifier and a sequence number are associated with each received packet-object in the packet-object header. In such embodiments, the crypto-output mux **610** maintains the next sequence number for a given flow in the output flow and sequence number table **630.** Exemplary operations of the crypto module **124** are described in U. S. Patent Application No. 09/999,647, entitled *Methods, Systems And Computer Program Products For Packet Ordering For Parallel Cryptographic Processing,* the disclosure of which is hereby incorporated herein by reference.

The inbound post-crypto module **126** may be configured to inspect inbound packet-objects to ensure their integrity. For example, routing flags in the pipeline processing header **205** may be checked to determine if the packet-object should be captured by the control processor, passed through the packet co-processor **100** as a non-IP packet, or discarded. If the routing flags indicate that the packet-object is to be captured, passed through, or discarded, then the packet-object will not be processed by any subsequent transform modules in the packet co-processor **100.** Additional checks may be performed on the packet-object, such as, but not limited to, verifying that the packet-object length is greater than or equal to a minimum length (*e.g.*, the minimum size of a packet-object header is 20 bytes and the minimum size of an IP packet is 40 bytes), verifying that the data field **220** is greater than or equal to a minimum length (*e.g.*, 20 bytes for an IP packet), verifying that the IP header checksum is correct, verifying that the IP version number is correct, verifying that the IP header length field is 20 bytes (five 32-bit words), verifying that the IP length field (bytes) 4 * IP header length field, and/or verifying that the IP length field is correct.

If any of the foregoing checks finds an error, then an error flag is set in the pipeline processing header **205** and the packet-object is not operated on by any subsequent transform modules in the packet co-processor. Instead, the packet-object is placed in the capture buffer for error handling by the system processor.

In addition, the inbound post-crypto module **126** may validate the SA selector fields with those stored in the SAD database in the SAD memory **120** and may update other SA-specific state information such as byte lifetimes, packet count, and user data count.

The bundle/fragmentation module **128** may be configured to check for SA bundles in outbound packet-objects by readings a more bundles flag in the pipeline processing header **205**. If the flag is set, then the packet-object is routed to the outbound pre-crypto module **122** for further processing. In accordance with particular embodiments, the SA entries for a bundle are adj acent in the SAD database in the SAD memory **120**. This may allow the next SA in the bundle to be accessed by incrementing the SAD index field in the pipeline processing header **205**. For inbound packet-objects, if no errors have been flagged, then the IPSec headers and any ESP padding that may have been applied may be stripped from the packet-object. The layered IP headers will be analyzed and removed until a transport protocol header or an IP destination address that is not for the current system is encountered. The inbound packet-object is then routed to the selector extract module **112** to process the next SA. The bundle/fragmentation module **128** may be further configured to fragment outgoing IPSec packet-objects if they are larger than the allowed path MTU between the IPSec and fragmentation is allowed as represented by a flag in the outermost IP header. The bundle/fragmentation module may be further configured to decrement the TTL value in the IP header. If the TTL value is 0 or -1, then the capture flag and TTL zero error flags are set in the pipeline processing header **205** so that the system processor is instructed to capture the packet-object for further processing.

Inbound packet-objects are routed to the inbound policy module **132** from the bundle/fragmentation module **128.** The inbound policy module **132** may be configured to determine if an inbound packet-object has a policy associated therewith. Specifically, the packet inbound policy module **132** may extract selectors from the outermost IP header of an inbound packet-object and use these selectors to perform a security policy lookup in the inbound SPD content addressable memory (CAM) **134.** In accordance with some embodiments of the present invention, the selectors may comprise a source IP address, a destination IP address, a protocol, a source TCP/UDP port, a destination TCP/UDP port, and an interface port (*i.e.*, the port selector field in the pipeline processing header, which is inserted by either the outbound input module **102** or the inbound input module **104**). In some embodiments of the present invention, the protocol used for SPD and SA lookup must be the transport protocol. Therefore, if the protocol is determined to be IP in IP (encapsulation), AH (authentication header for IP Version 6), IP Mobility, or IPComp (IP Payload Compression Protocol), then the inbound policy module **132** parses down to the next inner IP header to analyze that header, recursively, until the transport protocol is obtained in accordance with the IPSec specification. In some embodiments, the IP headers will be parsed down through four levels. If a transport protocol is not found within four levels, then a no transport protocol error flag and a capture routing flag may be set in the pipeline processing header **205** to direct the packet-object to the system processor for error handling.

If a policy is found in the inbound SPD CAM **134**, then the policy index (*i.e.,* SPD index) and the capture, discard, pass through, IKE, and control port flags are copied into the pipeline processing header **205**. If a policy is not found, then a no security policy match flag along with a capture flag is set in the pipeline processing header **205** to inform the control processor that the present packet-object is non-compliant. The SPD CAM **134** may be populated by the system processor based on security policies defined by a system operator or via an automated policy manager that can communicate with the system processor.

Outbound packet-objects from the bundle/fragmentation module **128** and inbound packet-objects from the inbound policy module **132** are provided to the capture queue module **136**. The capture queue module **136** may be configured to examine the routing flags in the pipeline processing header **205** to determine if the system processor should capture this packet-object or obtain a copy of this packet-object. If the packet-object is to be captured by the system processor, then the capture queue module **136** stores the packet-object into one of several defined queues. In some embodiments of the present invention, the system processor may access packet-objects in the queues using direct memory access (DMA).

An outbound output module **138** may be configured to receive an outbound packet stream and an inbound output module **140** may be configured to receive an inbound packet stream from the capture queue module **136.** Both the outbound output module **138** and the inbound input module **140** may be configured to perform the low-level interface protocol adaptation between the packet co-processor **100** and, for example, an output bus, either streaming or bus-based.

Thus, as discussed above, some embodiments of the packet co-processor **100,** according to the present invention, may facilitate processing of both inbound and outbound packet-objects in a common pipeline. In particular embodiments, the transform modules comprising the packet co-processor **100** may be configured with transform responsibilities that consume similar amounts of real-time to allow packets to move from transform module to transform module in a pipelined fashion. In other embodiments of the present invention, separate pipelines may be defined for the inbound and outbound packet-object streams. Such embodiments may allow for the elimination of some multiplexing and demultiplexing circuitry, but may use multiple transform modules to perform transform operations that are common to both inbound packet-objects and outbound packet-objects. In addition, these embodiments may provide higher performance.

Although **FIG. 1** illustrates an exemplary packet co-processor **100** architecture, it will be understood that the present invention is not limited to such a configuration, but is intended to encompass any configuration capable of carrying out the operations described above. In general, to enhance throughput, the packet co-processor **100** transform modules may be respectively implemented as one or more application specific integrated circuits (ASICs). In addition, the entire packet co-procesor **100** may be implemented as one or more (ASICs). It will be further appreciated, however, that the functionality of any or all of the packet co-processor **100** transform modules may be implemented using one or more ASICs, discrete hardware components, a programmed digital signal processor or microcontroller, and/or combinations thereof. In this regard, computer program code for carrying out operations of the respective packet co-processor **100** transform modules discussed above may be written in a high-level programming language, such as C or C++, for development convenience. In addition, computer program code for carrying out operations of the present invention may also be written in other programming languages, such as, but not limited to, interpreted languages. Some modules or routines may be written in assembly language or even micro-code to enhance performance and/or memory usage.

The flowchart of **FIG. 5** illustrates the architecture, functionality, and operations of some embodiments of the packet co-processor **100**. In this regard, each block represents a module, segment, or portion of code, which comprises one or more executable instructions for implementing the specified logical function(s). It should also be noted that in other implementations, the function(s) noted in the blocks may occur out of the order noted in **FIG. 5**. For example, two blocks shown in succession may, in fact, be executed substantially concurrently or the blocks may sometimes be executed in the reverse order, depending on the functionality involved.

Many variations and modifications can be made to the preferred embodiments without substantially departing from the principles of the present invention. All such variations and modifications are intended to be included herein within the scope of the present invention, as set forth in the following claims.

**Claims**

1. A method of processing IPSec packets, comprising:

   receiving (500) the packets;
   encapsulating (505) each of the packets that does not have a packet header with a packet header;
   processing (510) the encapsulated packets based on information contained in the packet headers using a plurality of transform modules (104, 108, 112, 118, 122, 124, 126, 128, 136) that are coupled to each other in a series configuration and that each have a specific individual function; and
   providing the encapsulated packets in parallel to respective ones of the plurality of transform modules, wherein said processing comprises using said respective ones of the plurality of transform modules to process the encapsulated packets in parallel independent of other ones of the plurality of transform modules.

2. The method of Claim 1, wherein one of the plurality (124) of transform modules comprises a plurality of parallel processors (605, 605'), the method further comprising:

   assigning a sequence identifier to each of the packets that specifies a serial order associated with the packet;
   providing the packets to the plurality of parallel processors;
   processing the packets in parallel using the plurality of parallel processors; and
   ordering the processed packets at an output of the one of the plurality of transform modules based on the sequence identifiers assigned to the packets.

3. The method of Claim 2, further comprising:

   classifying the packets so as to identify related packets;
   wherein assigning the sequence identifier comprises assigning the sequence identifier to related packets that specifies an ordering of the related packets; and
   wherein ordering the processed packets comprises ordering the processed packets at the output of the one of the plurality of transform modules based on the classifications of the packets and the sequence identifiers assigned to the packets.

4. The method of Claim 3, further comprising:

   assigning a flow identifier to related packets based on the classifications of the packets.

5. The method of Claim 4, wherein classifying the packets comprises evaluating a source address, destination address, and a protocol associated with the packets; and
   wherein assigning the flow identifier comprises assigning a flow identifier to related packets based on the source address, destination address, and protocol associated with the packets.

**6.** The method of Claim 4, wherein classifying the packets comprises evaluating a destination address, a security parameter index, and a protocol associated with the packets; and
wherein assigning the flow identifier comprises assigning a flow identifier to related packets based on the destination address, security parameter index, and protocol associated with the packets.

**7.** The method of Claim 1, wherein the packets comprise cryptographic packets.

**8.** The method of Claim 1, wherein the packets comprise a first plurality of packets associated with an inbound packet stream and a second plurality of packets associated with an outbound packet stream.

**9.** The method of Claim 8, wherein processing the encapsulated packets comprises processing the first plurality of packets associated with the inbound packet stream and the second plurality of packets associated with the outbound packet stream using at least one of the plurality of transform modules.

**10.** The method of Claim 1, further comprising:

updating routing flags in a respective one of the packet-object headers to indicate whether a respective one of the packet-objects should be processed by the
plurality of transform modules, passed through the plurality of transform modules without being transformed, or captured by a system processor.

**11.** The method of Claim 1, further comprising:

multiplexing an inbound stream of encapsulated packets with an outbound stream of encapsulated packets into a serial stream of encapsulated packets.

**12.** The method of Claim 11, further comprising:

verifying that a respective one of the encapsulated packets has fields that are populated with data that are within specified limits.

**13.** The method of Claim 11, further comprising:

extracting selectors from a respective one of the outbound encapsulated packets; and
obtaining a security policy index from a security policy database for the respective one of the outbound encapsulated packets based on the extracted selectors.

**14.** The method of Claim 13, wherein the selectors comprise a source IP address, a destination IP address, a protocol, a source port, and a destination port.

**15.** The method of Claim 14, wherein the protocol is a transport protocol.

**16.** The method of Claim 13, further comprising:

searching a security association database to obtain a security association for the respective one of the outbound encapsulated packets based on the extracted selectors and the security policy index.

**17.** The method of Claim 16, wherein searching the security association database comprises:

hashing the extracted selectors and the security policy index to obtain a hash key value; and
performing a linear search in the security association database using the hash key value.

**18.** The method of Claim 16, further comprising:

inserting cryptographic information into the packet-object header of the respective one of the outbound encapsulated packets based on the security association for the respective one of the outbound encapsulated packets.

**19.** The method of Claim 11, further comprising:

extracting selectors from a respective one of the inbound encapsulated packets.

**20.** The method of Claim 19, wherein the selectors comprise a destination IP address, a protocol, a security policy index, and an interface port.

**21.** The method of Claim 20, wherein the protocol is a transport protocol.

**22.** The method of Claim 19, further comprising:

searching a security association database to obtain a security association for the respective one of the inbound encapsulated packets based on the extracted selectors.

**23.** The method of Claim 22, wherein searching the security association database comprises:

hashing the extracted selectors to obtain a hash key value; and
performing a linear search in the security association database using the hash key value.

**24.** The method of Claim 22, further comprising:

inserting cryptographic information into the packet-object header of the respective one of the inbound encapsulated packets based on the security association for the respective one of the inbound encapsulated packets.

**25.** The method of Claim 11, further comprising:

decrypting a respective one of the inbound encapsulated packets; and
verifying that the respective one of the inbound encapsulated packets has fields that are populated with data that are within specified limits.

**26.** The method of Claim 11, further comprising:

fragmenting a respective one of the encapsulated packets if a size of the respective one of the encapsulated packets exceeds a maximum transmission unit size associated with the respective one of the encapsulated packets.

**27.** The method of Claim 11, further comprising:

decrypting a respective one of the inbound encapsulated packets;
extracting selectors from the respective one of the inbound encapsulated packets; and
obtaining a security policy index from a security policy database for the respective one of the inbound encapsulated packets based on the extracted selectors.

**28.** The method of Claim 27, wherein the selectors comprise a source IP address, a destination IP address, a protocol, a source port, a destination port, and an interface port.

**29.** The method of Claim 28, wherein the protocol is a transport protocol.

**30.** The method of Claim 10, further comprising:

capturing a respective one of the encapsulated packets to a system processor based on at least one of the routing flags.

**31.** An IPSec packet processing system comprising:

a plurality of transform modules (104, 108, 112, 118, 122, 124, 126, 128, 136) that are coupled to each other in a series configuration, each have a specific individual function, and are configured to receive a serial stream of packets that are each encapsulated with a packet header, respective ones of the plurality of transform modules being further configured to receive the encapsulated packets in parallel and to process the encapsulated packets in parallel independent of other ones of the plurality of transform modules based on information contained in the packet headers.

**32.** The IPSec packet processing system of Claim 31, wherein one of the of transform modules comprises:

a plurality of parallel processors (605);
a demultiplexer (600) that is configured to receive the serial stream of packets, identify a sequence of the received packets, and provide the packets to the plurality of parallel processors; and
a multiplexer (610) that is configured to receive processed packets from the plurality of parallel processors and to output the processed packets in the sequence identified by the demultiplexer.

**33.** The IPSec packet processing system of Claim 32, wherein the demultiplexer (600) is further configured to assign a sequence identifier to related packets that specifies an ordering of the related packets; and
wherein the multiplexer (610) is further configured to order the processed packets based on the sequence identifiers assigned to the packets.

**34.** The IPSec packet processing system of Claim 33, wherein the demultiplexer (600) is further configured to classify the packets so as to identify related packets and to assign a flow identifier to related packets based on the classifications of the packets.

**35.** The IPSec packet processing system of Claim 34, wherein the demultiplexer (600) is further configured to evaluate a source address, destination address, and a protocol associated with the packets and assign a flow identifier to related packets based on the source address, destination address, and protocol associated with the packets.

**36.** The IPSec packet processing system of Claim 34, wherein the demultiplexer (600) is further configured to evaluate a destination address, a security parameter index, and a protocol associated with the packets and assign a flow identifier to related packets based on the destination address, security parameter index, and protocol associated with the packets.

**37.** A computer program product for processing IPSec packets, comprising:

a computer readable program medium having computer readable program code embodied therein;
computer readable program code configured to receive (500) the packets;
computer readable program code configured to encapsulate (505) each of the packets that does not have a packet header with a packet header;
computer readable program code configured to process (510) the encapsulated packets based on information contained in the packet headers using a plurality of transform modules (104, 108, 112, 118, 122, 124, 128, 136) that are coupled to each other in a series configuration and that each have a specific individual function; and
computer readable program code configured to provide the encapsulated packets in parallel to respective ones of the plurality of transform modules, wherein the computer readable program code configured to process the encapsulated packets is configured to use said respective ones of the plurality of transform modules to process the encapsulated packets in parallel independent of other ones of the plurality of transform modules.

**38.** The computer program product of Claim 37, further comprising:

computer readable program code configured to update routing flags in a respective one of the packet headers to indicate whether a respective one of the packet should be processed by the plurality of transform modules, passed through the plurality of transform modules without being transformed, or captured by a system processor.

**39.** The computer program product of Claim 38, further comprising:

computer readable program code configured to capture a respective one of the encapsulated packets to a system processor based on at least one of the routing flags.

**40.** The computer program product of Claim 37, further comprising:

computer readable program code configured to multiplex an inbound stream of encapsulated packets with an outbound stream of encapsulated packets into a serial stream of encapsulated packets.

41. The computer program product of Claim 40, further comprising:

computer readable program code configured to verify that a respective one of the encapsulated packets has fields that are populated with data that are within specified limits.

42. The computer program product of Claim 40, further comprising:

computer readable program code configured to extract selectors from a respective one of the outbound encapsulated packets; and
computer readable program code configured to obtain a security policy index from a security policy database for the respective one of the outbound encapsulated packets based on the extracted selectors.

43. The computer program product of Claim 42, wherein the selectors comprise a source IP address, a destination IP address, a protocol, a source port, and a destination port.

44. The computer program product of Claim 43, wherein the protocol is a transport protocol.

45. The computer program product of Claim 42, further comprising:

computer readable program code configured to search a security association database to obtain a security association for the respective one of the outbound encapsulated packets based on the extracted selectors and the security policy index.

46. The computer program product of Claim 45, wherein the computer readable program code configured to search the security association database comprises:

computer readable program code configured to hash the extracted selectors and the security policy index to obtain a hash key value; and
computer readable program code configured to perform a linear search in the security association database using the hash key value.

47. The computer program product of Claim 45, further comprising:

computer readable program code configured to insert cryptographic information into the packetheader of the respective one of the outbound encapsulated packets based on the security association for the respective one of the outbound encapsulated packets.

48. The computer program product of Claim 40, further comprising:

computer readable program code configured to extract selectors from a respective one of the inbound encapsulated packets.

49. The computer program product of Claim 48, wherein the selectors comprise a destination IP address, a protocol, a security policy index, and an interface port.

50. The computer program product of Claim 49, wherein the protocol is a transport protocol.

51. The computer program product of Claim 48, further comprising:

computer readable program code configured to search a security association database to obtain a security association for the respective one of the inbound encapsulated packets based on the extracted selectors.

52. The computer program product of Claim 51, wherein computer readable program code configured to search the security association database comprises:

computer readable program code configured to hash the extracted selectors to obtain a hash key value; and

computer readable program code configured to perform a linear search in the security association database using the hash key value.

**53.** The computer program product of Claim 51, further comprising:

computer readable program code configured to insert cryptographic information into the packet header of the respective one of the inbound encapsulated packets based on the security association for the respective one of the inbound encapsulated packets.

**54.** The computer program product of Claim 40, further comprising:

computer readable program code configured to decrypt a respective one of the inbound encapsulated packets; and
computer readable program code configured to verify that the respective one of the inbound encapsulated packets has fields that are populated with data that are within specified limits.

**55.** The computer program product of Claim 40, further comprising:

computer readable program code configured to fragment a respective one of the encapsulated packets if a size of the respective one of the encapsulated packets exceeds a maximum transmission unit size associated with the respective one of the encapsulated packets.

**56.** The computer program product of Claim 40, further comprising:

computer readable program code configured to decrypt a respective one of the inbound encapsulated packets;
computer readable program code configured to extract selectors from the respective one of the inbound encapsulated packets; and
computer readable program code configured to obtain a security policy index from a security policy database for the respective one of the inbound encapsulated packets based on the extracted selectors.

**57.** The computer program product of Claim 56, wherein the selectors comprise a source IP address, a destination IP address, a protocol, a source port, a destination port, and an interface port.

**58.** The computer program product of Claim 57, wherein the protocol is a transport protocol

**Patentansprüche**

**1.** Verfahren zum Verarbeiten von IPSec-Paketen, das Folgendes beinhaltet:

Empfangen (500) der Pakete;
Verkapseln (505) jedes der Pakete, das keinen Paketkopf hat, mit einem Paketkopf;
Verarbeiten (510) der verkapselten Pakete auf der Basis der in den Paketköpfen enthaltenen Informationen mittels einer Mehrzahl von Transformationsmodulen (104, 108, 112, 118, 122, 124, 126, 128, 136), die in einer Serienkonfiguration miteinander gekoppelt sind und jeweils eine spezielle individuelle Funktion haben; und
paralleles Senden der verkapselten Pakete zu jeweiligen aus der Mehrzahl von Transformationsmodulen, wobei das genannte Verarbeiten das Verwenden der genannten jeweiligen aus der Mehrzahl von Transformationsmodulen zum parallelen Verarbeiten der verkapselten Pakete unabhängig von anderen aus der Mehrzahl von Transformationsmodulen beinhaltet.

**2.** Verfahren nach Anspruch 1, wobei eines aus der Mehrzahl (124) von Transformationsmodulen mehrere parallele Prozessoren (605, 605') umfasst, wobei das Verfahren ferner Folgendes beinhaltet:

Zuordnen einer Sequenzkennung zu jedem der Pakete, die eine serielle Ordnung in Verbindung mit dem Paket vorgibt;
Senden der Pakete zu der Mehrzahl von parallelen Prozessoren;
paralleles Verarbeiten der Pakete mit der Mehrzahl von parallelen Prozessoren; und
Ordnen der verarbeiteten Pakete an einem Ausgang des einen aus der Mehrzahl von Transformationsmodulen auf der Basis der den Paketen zugeordneten Sequenzkennungen.

3. Verfahren nach Anspruch 2, das ferner Folgendes beinhaltet:

Klassifizieren der Pakete, um verwandte Pakete zu identifizieren;
wobei das Zuordnen der Sequenzkennung das Zuordnen der Sequenzkennung zu verwandten Paketen beinhaltet, die eine Ordnung der verwandten Pakete vorgibt; und
wobei das Ordnen der verarbeiteten Pakete das Ordnen der verarbeiteten Pakete am Ausgang des einen aus der Mehrzahl von Transformationsmodulen auf der Basis der Klassifikationen der Pakete und der den Paketen zugeordneten Sequenzkennungen beinhaltet.

4. Verfahren nach Anspruch 3, das ferner das Zuordnen einer Flusskennung zu verwandten Paketen auf der Basis der Klassifikationen der Pakete beinhaltet.

5. Verfahren nach Anspruch 4, wobei das Klassifizieren der Pakete das Beurteilen einer Quelladresse, einer Zieladresse und eines Protokolls in Verbindung mit den Paketen beinhaltet; und
wobei das Zuordnen der Flusskennung das Zuordnen einer Flusskennung zu verwandten Paketen auf der Basis der Quelladresse, der Zieladresse und des Protokolls in Verbindung mit den Paketen beinhaltet.

6. Verfahren nach Anspruch 4, wobei das Klassifizieren der Pakete das Beurteilen einer Zieladresse, eines Sicherheitsparameterindexes und eines Protokolls in Verbindung mit den Paketen beinhaltet; und
wobei das Zuordnen der Flusskennung das Zuordnen einer Flusskennung zu verwandten Paketen auf der Basis der Zieladresse, des Sicherheitsparameterindexes und des Protokolls in Verbindung mit den Paketen beinhaltet.

7. Verfahren nach Anspruch 1, wobei die Pakete kryptografische Pakete umfassen.

8. Verfahren nach Anspruch 1, wobei die Pakete eine erste Mehrzahl von Paketen in Verbindung mit einem eingehenden Paketstrom und eine zweite Mehrzahl von Paketen in Verbindung mit einem abgehenden Paketstrom umfassen.

9. Verfahren nach Anspruch 8, wobei das Verarbeiten der verkapselten Pakete das Verarbeiten der ersten Mehrzahl von Paketen in Verbindung mit dem eingehenden Paketstrom und der zweiten Mehrzahl von Paketen in Verbindung mit dem abgehenden Paketstrom unter Verwendung von wenigstens einem aus der Mehrzahl von Transformationsmodulen beinhaltet.

10. Verfahren nach Anspruch 1, das ferner Folgendes beinhaltet:

Aktualisieren von Routing-Flags in einem jeweiligen einen der Paketobjektköpfe, um anzuzeigen, ob ein jeweiliges der Paketobjekte durch die Mehrzahl von Transformationsmodulen verarbeitet, ohne Transformation durch die Mehrzahl von Transformationsmodulen geleitet oder durch einen Systemprozessor erfasst werden soll.

11. Verfahren nach Anspruch 1, das ferner das Multiplexieren eines Eingangsstroms von verkapselten Paketen mit einem Ausgangsstrom von verkapselten Paketen zu einem seriellen Strom von verkapselten Paketen beinhaltet.

12. Verfahren nach Anspruch 11, das ferner das Prüfen beinhaltet, dass ein jeweiliges der verkapselten Pakete Felder hat, die mit Daten ausgefüllt sind, die innerhalb vorgegebener Grenzen liegen.

13. Verfahren nach Anspruch 11, das ferner Folgendes beinhaltet:

Extrahieren von Selektoren von einem jeweiligen einen der abgehenden verkapselten Pakete; und
Einholen eines Sicherheitsrichtlinien-Indexes aus einer Sicherheitsrichtlinien-Datenbank für das jeweilige eine der abgehenden verkapselten Pakete auf der Basis der extrahierten Selektoren.

14. Verfahren nach Anspruch 13, wobei die Selektoren eine Quell-IP-Adresse, eine Ziel-IP-Adresse, ein Protokoll, einen Quellport und einen Zielport umfassen.

15. Verfahren nach Anspruch 14, wobei das Protokoll ein Transportprotokoll ist.

16. Verfahren nach Anspruch 13, das ferner das Durchsuchen einer Sicherheitsassoziationsdatenbank beinhaltet, um eine Sicherheitsassoziation für das jeweilige eine der abgehenden verkapselten Pakete auf der Basis der extrahierten Selektoren und des Sicherheitsrichtlinien-Indexes beinhaltet.

17. Verfahren nach Anspruch 16, wobei das Durchsuchen der Sicherheitsassoziationsdatenbank Folgendes beinhaltet:

Hashen der extrahierten Selektoren und des Sicherheitsrichtlinien-Indexes, um einen Hash-Key-Wert zu erhalten; und
Ausführen einer linearen Suche in der Sicherheitsassoziations-Datenbank mit dem Hash-Key-Wert.

18. Verfahren nach Anspruch 16, das ferner das Einfügen von kryptografischen Informationen in den Paketobjektkopf des jeweiligen einen der abgehenden verkapselten Pakete auf der Basis der Sicherheitsassoziation für das jeweilige eine der abgehenden verkapselten Pakete beinhaltet.

19. Verfahren nach Anspruch 11, das ferner das Extrahieren von Selektoren aus dem jeweiligen einen der eingehenden verkapselten Pakete beinhaltet.

20. Verfahren nach Anspruch 19, wobei die Selektoren eine Ziel-IP-Adresse, ein Protokoll, einen Sicherheitsrichtlinien-Index und einen Schnittstellenport umfassen.

21. Verfahren nach Anspruch 20, wobei das Protokoll ein Transportprotokoll ist.

22. Verfahren nach Anspruch 19, das ferner das Durchsuchen einer Sicherheitsassoziationsdatenbank beinhaltet, um eine Sicherheitsassoziation für das jeweilige eine der eingehenden verkapselten Pakete auf der Basis der extrahierten Selektoren zu erhalten.

23. Verfahren nach Anspruch 22, wobei das Durchsuchen der Sicherheitsassoziationsdatenbank Folgendes beinhaltet:

Hashen der extrahierten Selektoren, um einen Hash-Key-Wert zu erhalten; und
Ausführen einer linearen Suche in der Sicherheitsassoziationsdatenbank mit dem Hash-Key-Wert.

24. Verfahren nach Anspruch 22, das ferner das Einfügen von kryptografischen Informationen in den Paketobjektkopf des jeweiligen einen der eingehenden verkapselten Pakete auf der Basis der Sicherheitsassoziation für das jeweilige eine der eingehenden verkapselten Pakete beinhaltet.

25. Verfahren nach Anspruch 11, das ferner Folgendes beinhaltet:

Entschlüsseln eines jeweiligen einen der eingehenden verkapselten Pakete; und
Prüfen, ob das jeweilige eine der eingehenden verkapselten Pakete Felder hat, die mit Daten ausgefüllt sind, die innerhalb vorgegebener Grenzen liegen.

26. Verfahren nach Anspruch 11, das ferner das Fragmentieren eines jeweiligen einen der verkapselten Pakete beinhaltet, wenn eine Größe des jeweiligen einen der verkapselten Pakete eine maximale Übertragungseinheitsgröße in Verbindung mit dem jeweiligen einen der verkapselten Pakete übersteigt.

27. Verfahren nach Anspruch 11, das ferner Folgendes beinhaltet:

Entschlüsseln eines jeweiligen einen der eingehenden verkapselten Pakete;
Extrahieren von Selektoren von dem jeweiligen einen der eingehenden verkapselten Pakete; und
Einholen eines Sicherheitsrichtlinien-Indexes aus einer Sicherheitsrichtlinien-Datenbank für das jeweilige eine der eingehenden verkapselten Pakete auf der Basis der extrahierten Selektoren.

28. Verfahren nach Anspruch 27, wobei die Selektoren eine Quell-IP-Adresse, eine Ziel-IP-Adresse, ein Protokoll, einen Quellport, einen Zielport und einen Schnittstellenport umfassen.

29. Verfahren nach Anspruch 28, wobei das Protokoll ein Transportprotokoll ist.

30. Verfahren nach Anspruch 10, das ferner das Erfassen eines jeweiligen einen der verkapselten Pakete zu einem Systemprozessor auf der Basis von wenigstens einem der Routing-Flags beinhaltet.

**31.** IPSec-Paketverarbeitungssystem, das Folgendes umfasst:

eine Mehrzahl von Transformationsmodulen (104, 108, 112, 118, 122, 124, 126, 128, 136), die in einer Serienkonfiguration miteinander gekoppelt sind und jeweils eine spezielle individuelle Funktion haben und so konfiguriert sind, dass sie einen seriellen Strom von Paketen empfangen, die jeweils mit einem Paketkopf verkapselt sind, wobei jeweilige aus der Mehrzahl von Transformationsmodulen ferner zum parallelen Empfangen der verkapselten Pakete und zum parallelen Verarbeiten der verkapselten Pakete unabhängig von anderen aus der Mehrzahl von Transformationsmodulen auf der Basis von in den Paketköpfen enthaltenen Informationen konfiguriert sind.

**32.** IPSec-Paketverarbeitungssystem nach Anspruch 31, wobei eines aus der Mehrzahl von Transformationsmodulen Folgendes umfasst:

eine Mehrzahl von parallelen Prozessoren (605);
einen Demultiplexer (600), der zum Empfangen des seriellen Stroms von Paketen, zum Identifizieren einer Folge der empfangenen Pakete und zum Senden der Pakete zu der Mehrzahl von parallelen Prozessoren konfiguriert ist; und
einen Multiplexer (610), der zum Empfangen verarbeiteter Pakete von der Mehrzahl von parallelen Prozessoren und zum Ausgeben der verarbeiteten Pakete in der von dem Demultiplexer identifizierten Sequenz konfiguriert ist.

**33.** IPSec-Paketverarbeitungssystem nach Anspruch 32, wobei der Demultiplexer (600) ferner zum Zuordnen einer Sequenzkennung zu verwandten Paketen konfiguriert ist, die eine Ordnung der verwandten Pakete vorgibt; und wobei der Multiplexer (610) ferner zum Ordnen der verarbeiteten Pakete auf der Basis der den Paketen zugeordneten Sequenzkennungen konfiguriert ist.

**34.** IPSec-Paketverarbeitungssystem nach Anspruch 33, wobei der Demultiplexer (600) ferner zum Klassifizieren der Pakete konfiguriert ist, um verwandte Pakete zu identifizieren und verwandten Paketen eine Flusskennung auf der Basis der Klassifikationen der Pakete zuzuordnen.

**35.** IPSec-Paketverarbeitungssystem nach Anspruch 34, wobei der Demultiplexer (600) ferner zum Beurteilen einer Quelladresse, einer Zieladresse und eines Protokolls in Verbindung mit den Paketen und zum Zuordnen einer Flusskennung zu verwandten Paketen auf der Basis der Quelladresse, der Zieladresse und eines Protokolls in Verbindung mit den Paketen konfiguriert ist.

**36.** IPSec-Paketverarbeitungssystem nach Anspruch 34, wobei der Demultiplexer (600) ferner zum Beurteilen einer Zieladresse, eines Sicherheitsparameterindexes und eines Protokolls in Verbindung mit den Paketen und zum Zuordnen einer Flusskennung zu verwandten Paketen auf der Basis der Zieladresse, des Sicherheitsparameterindexes und des Protokolls in Verbindung mit den Paketen konfiguriert ist.

**37.** Computerprogrammprodukt zum Verarbeiten von IPSec-Paketen, das Folgendes umfasst:

ein rechnerlesbares Programmmedium, auf dem rechnerlesbarer Programmcode ausgestaltet ist;
rechnerlesbaren Programmcode, der zum Empfangen (500) der Pakete konfiguriert ist;
rechnerlesbaren Programmcode, der zum Verkapseln (505) jedes der Pakete, die keinen Paketkopf haben, mit einem Paketkopf konfiguriert ist;
rechnerlesbaren Programmcode, der zum Verarbeiten (510) der verkapselten Pakete auf der Basis der in den Paketköpfen enthaltenen Informationen mit einer Mehrzahl von Transformationsmodulen (104, 108, 112, 118, 122, 124, 128, 136) konfiguriert ist, die miteinander in einer Serienkonfiguration gekoppelt sind und jeweils eine spezifische individuelle Funktion haben; und
rechnerlesbaren Programmcode, der zum parallelen Übertragen der verkapselten Pakete zu jeweiligen aus der Mehrzahl von Transformationsmodulen konfiguriert ist, wobei der zum Verarbeiten der verkapselten Pakete konfigurierte rechnerlesbare Programmcode so konfiguriert ist, dass er die genannten jeweiligen aus der Mehrzahl von Transformationsmodulen zum parallelen Verarbeiten der verkapselten Pakete unabhängig von anderen aus der Mehrzahl von Transformationsmodulen verwendet.

**38.** Computerprogrammprodukt nach Anspruch 37, das ferner Folgendes umfasst:

rechnerlesbaren Programmcode, der zum Aktualisieren von Routing-Flags in jeweiligen der Paketköpfe konfiguriert ist, um anzuzeigen, ob ein jeweiliges der Pakete von der Mehrzahl von Transformationsmodulen verarbeitet, ohne Transformation durch die mehreren Transformationsmodule geleitet oder von einem Systemprozessor erfasst werden soll.

39. Computerprogrammprodukt nach Anspruch 28, das ferner rechnerlesbaren Programmcode umfasst, der zum Erfassen eines jeweiligen einen der verkapselten Pakete zu einem Systemprozessor auf der Basis von wenigstens einem der Routing-Flags konfiguriert ist.

40. Computerprogrammprodukt nach Anspruch 37, das ferner rechnerlesbaren Programmcode umfasst, der zum Multiplexieren eines eingehenden Stroms von verkapselten Paketen mit einem abgehenden Strom von verkapselten Paketen zu einem seriellen Strom von verkapselten Paketen konfiguriert ist.

41. Computerprogrammprodukt nach Anspruch 40, das ferner rechnerlesbaren Programmcode umfasst, der zum Prüfen konfiguriert ist, dass ein jeweiliges der verkapselten Pakete Felder hat, die mit Daten ausgefüllt sind, die innerhalb vorgegebener Grenzen liegen.

42. Computerprogrammprodukt nach Anspruch 40, das ferner Folgendes umfasst:

rechnerlesbaren Programmcode, der zum Extrahieren von Selektoren aus einem jeweiligen einen der abgehenden verkapselten Pakete konfiguriert ist; und
rechnerlesbaren Programmcode, der zum Einholen eines Sicherheitsrichtlinien-Indexes aus einer Sicherheitsrichtlinien-Datenbank für das jeweilige eine der abgehenden verkapselten Pakete auf der Basis der extrahierten Selektoren konfiguriert ist.

43. Computerprogrammprodukt nach Anspruch 42, wobei die Selektoren eine Quell-IP-Adresse, eine Ziel-IP-Adresse, ein Protokoll, einen Quellport und einen Zielport umfassen.

44. Computerprogrammprodukt nach Anspruch 43, wobei das Protokoll ein Transportprotokoll ist.

45. Computerprogrammprodukt nach Anspruch 42, das ferner rechnerlesbaren Programmcode umfasst, der zum Durchsuchen einer Sicherheitsassoziationsdatenbank konfiguriert ist, um eine Sicherheitsassoziation für das jeweilige eine der abgehenden verkapselten Pakete auf der Basis der extrahierten Selektoren und des Sicherheitsrichtlinien-Indexes zu erhalten.

46. Computerprogrammprodukt nach Anspruch 45, wobei der zum Durchsuchen der Sicherheitsassoziationsdatenbank konfigurierte rechnerlesbare Programmcode Folgendes umfasst:

rechnerlesbaren Programmcode, der zum Hashen der extrahieren Selektoren und des Sicherheitsrichtlinien-Indexes konfiguriert ist, um einen Hash-Key-Wert zu erhalten; und
rechnerlesbaren Programmcode, der zum Ausführen einer linearen Suche in der Sicherheitsassoziationsdatenbank mit dem Hash-Key-Wert konfiguriert ist.

47. Computerprogrammcode nach Anspruch 45, das ferner rechnerlesbaren Programmcode umfasst, der zum Einfügen von kryptografischen Informationen in den Paketkopf des jeweiligen einen der abgehenden verkapselten Pakete auf der Basis der Sicherheitsassoziation für das jeweilige eine der abgehenden verkapselten Pakete konfiguriert ist.

48. Computerprogrammcode nach Anspruch 40, der ferner rechnerlesbaren Programmcode umfasst, der zum Extrahieren von Selektoren aus einem jeweiligen einen der eingehenden verkapselten Pakete konfiguriert ist.

49. Computerprogrammprodukt nach Anspruch 48, wobei die Selektoren eine Ziel-IP-Adresse, ein Protokoll, einen Sicherheitsrichtlinien-Index und einen Schnittstellenport umfassen.

50. Computerprogrammprodukt nach Anspruch 49, wobei das Protokoll ein Transportprotokoll ist.

51. Computerprogrammprodukt nach Anspruch 48, das ferner rechnerlesbaren Programmcode umfasst, der zum Durchsuchen einer Sicherheitsassoziationsdatenbank konfiguriert ist, um eine Sicherheitsassoziation für das jeweilige eine der eingehenden verkapselten Pakete auf der Basis der extrahierten Selektoren zu erhalten.

**52.** Computerprogrammprodukt nach Anspruch 51, wobei der zum Durchsuchen der Sicherheitsassoziationsdatenbank konfigurierte rechnerlesbare Programmcode Folgendes umfasst:

rechnerlesbaren Programmcode, der zum Hashen der extrahieren Selektoren konfiguriert ist, um einen Hash-Key-Wert zu erhalten; und
rechnerlesbaren Programmcode, der zum Durchführen einer linearen Suche in der Sicherheitsassoziationsdatenbank mit dem Hash-Key-Wert konfiguriert ist.

**53.** Computerprogrammprodukt nach Anspruch 51, das ferner rechnerlesbaren Programmcode umfasst, der zum Einfügen von kryptografischen Informationen in den Paketkopf des jeweiligen einen der eingehenden verkapselten Pakete auf der Basis der Sicherheitsassoziation für das jeweilige eine der eingehenden verkapselten Pakete konfiguriert ist.

**54.** Computerprogrammprodukt nach Anspruch 40, das ferner Folgendes umfasst:

rechnerlesbaren Programmcode, der zum Entschlüsseln eines jeweiligen einen der eingehenden verkapselten Pakete konfiguriert ist; und
rechnerlesbaren Programmcode, der zum Prüfen konfiguriert ist, dass das jeweilige eine der eingehenden verkapselten Pakete Felder hat, die mit Daten ausgefüllt sind, die innerhalb vorgegebener Grenzen liegen.

**55.** Computerprogrammprodukt nach Anspruch 40, das ferner rechnerlesbaren Programmcode umfasst, der zum Fragmentieren eines jeweiligen einen der verkapselten Pakete konfiguriert ist, wenn eine Größe des jeweiligen einen der verkapselten Pakete eine maximale Übertragungseinheitsgröße in Verbindung mit dem jeweiligen einen der verkapselten Pakete übersteigt.

**56.** Computerprogrammprodukt nach Anspruch 40, das ferner Folgendes umfasst:

rechnerlesbaren Programmcode, der zum Entschlüsseln eines jeweiligen einen der eingehenden verkapselten Pakete konfiguriert ist;
rechnerlesbaren Programmcode, der zum Extrahieren von Selektoren aus dem jeweiligen einen der eingehenden verkapselten Pakete konfiguriert ist; und
rechnerlesbaren Programmcode, der zum Einholen eines Sicherheitsrichtlinien-Indexes aus einer Sicherheitsrichtlinien-Datenbank für das jeweilige eine der eingehenden verkapselten Pakete auf der Basis der extrahierten Selektoren konfiguriert ist.

**57.** Computerprogrammprodukt nach Anspruch 56, wobei die Selektoren eine Quell-IP-Adresse, eine Ziel-IP-Adresse, ein Protokoll, einen Quellport, einen Zielport und einen Schnittstellenport umfassen.

**58.** Computerprogrammprodukt nach Anspruch 57, wobei das Protokoll ein Transportprotokoll ist.

**Revendications**

**1.** Procédé de traitement de paquets IPSec comprenant :

la réception (500) des paquets ;
l'encapsulation (505) de chacun des paquets, qui n'a pas d'en-tête de paquet, avec un en-tête de paquet ;
le traitement (510) des paquets encapsulés, sur la base des informations contenues dans les en-têtes de paquets, en utilisant une pluralité de modules de transformation (104, 108, 112, 118, 122, 124, 126, 128, 136) qui sont couplés l'un à l'autre suivant une configuration en série et chacun ayant une fonction individuelle spécifique ; et
la fourniture des paquets encapsulés en parallèle à des modules respectifs de la pluralité de modules de transformation, cas dans lequel ledit traitement comporte l'utilisation desdits modules respectifs de la pluralité de modules de transformation afin de traiter les paquets encapsulés en parallèle indépendamment des autres modules de la pluralité de modules de transformation.

**2.** Procédé selon la revendication 1, un module de la pluralité (124) de modules de transformation comprenant une pluralité de processeurs parallèles (605, 605'), le procédé comprenant en outre :

l'attribution d'un identifiant de séquence à chacun des paquets qui spécifie un ordre sériel qui est associé au paquet ;

la fourniture des paquets à la pluralité de processeurs parallèles ;

le traitement des paquets en parallèle grâce à l'utilisation de la pluralité de processeurs parallèles ; et

l'ordonnancement des paquets traités, au niveau d'une sortie dudit module de la pluralité de modules de transformation, sur la base des identifiants de séquence attribués aux paquets.

3. Procédé selon la revendication 2, comprenant en outre :

la classification des paquets de sorte à identifier des paquets apparentés ;

cas dans lequel l'attribution de l'identifiant de séquence comprend l'attribution de l'identifiant de séquence à des paquets apparentés qui spécifie un ordonnancement des paquets apparentés ; et

cas dans lequel l'ordonnancement des paquets traités comprend l'ordonnancement des paquets traités au niveau de la sortie dudit module de la pluralité de modules de transformation, sur la base des classifications des paquets et des identifiants de séquence attribués aux paquets.

4. Procédé selon la revendication 3, comprenant en outre :

l'attribution d'un identifiant de flux à des paquets apparentés sur la base des classifications des paquets.

5. Procédé selon la revendication 4, la classification des paquets comprenant l'évaluation d'une adresse d'origine, d'une adresse de destination et d'un protocole associés aux paquets ; et

cas dans lequel l'attribution de l'identifiant de flux comprend l'attribution d'un identifiant de flux à des paquets apparentés sur la base de l'adresse d'origine, de l'adresse de destination et du protocole associés aux paquets.

6. Procédé selon la revendication 4, la classification des paquets comprenant l'évaluation d'une adresse de destination, d'un index des paramètres de sécurité et d'un protocole associés aux paquets ; et

cas dans lequel l'attribution de l'identifiant de flux comprend l'attribution d'un identifiant de flux à des paquets apparentés sur la base de l'adresse de destination, de l'index des paramètres de sécurité et du protocole associés aux paquets.

7. Procédé selon la revendication 1, les paquets comprenant des paquets crytographiques.

8. Procédé selon la revendication 1, les paquets comprenant une première pluralité de paquets associés à un flux de paquets entrants et une deuxième pluralité de paquets associés à un flux de paquets sortants.

9. Procédé selon la revendication 8, le traitement des paquets encapsulés comprenant le traitement de la première pluralité de paquets associés au flux de paquets entrants et de la deuxième pluralité de paquets associés au flux de paquets sortants, en utilisant au moins un module de la pluralité de modules de transformation.

10. Procédé selon la revendication 1, comprenant en outre :

la mise à jour des balises de routage dans un en-tête respectif des en-têtes d'objets de paquet afin d'indiquer si un objet de paquet respectif des objets de paquet devrait être traité par la pluralité de modules de transformation, acheminé à travers la pluralité de modules de transformation sans être transformé, ou saisi par un processeur de système.

11. Procédé selon la revendication 1, comprenant en outre :

le multiplexage d'un flux entrant de paquets encapsulés avec un flux sortant de paquets encapsulés pour en faire un flux sériel de paquets encapsulés.

12. Procédé selon la revendication 11, comprenant en outre :

la vérification qu'un paquet respectif des paquets encapsulés possède des champs qui sont remplis de données lesquelles se trouvent dans des limites spécifiées.

13. Procédé selon la revendication 11, comprenant en outre :

l'extraction de sélecteurs à partir d'un paquet respectif des paquets encapsulés sortants ; et
l'obtention d'un index de politique de sécurité à partir d'une base de données de politiques de sécurité pour le paquet respectif des paquets encapsulés sortants sur la base des sélecteurs extraits.

**14.** Procédé selon la revendication 13, les sélecteurs comprenant une adresse IP d'origine, une adresse IP de destination, un protocole, un port d'origine et un port de destination.

**15.** Procédé selon la revendication 14, le protocole étant un protocole de transport.

**16.** Procédé selon la revendication 13, comprenant en outre :

la recherche dans une base de données des associations de sécurité afin d'obtenir une association de sécurité pour le paquet respectif des paquets encapsulés sortants sur la base des sélecteurs extraits et de l'index de politique de sécurité.

**17.** Procédé selon la revendication 16, la recherche dans la base de données des associations de sécurité comprenant :

le hachage des sélecteurs extraits et de l'index de politique de sécurité afin d'obtenir une valeur de clé de hachage ; et
la réalisation d'une recherche linéaire dans la base de données des associations de sécurité en utilisant la valeur de clé de hachage.

**18.** Procédé selon la revendication 16, comprenant en outre :

l'insertion d'informations cryptographiques dans l'en-tête d'objet de paquet du paquet respectif des paquets encapsulés sortants sur la base de l'association de sécurité pour le paquet respectif des paquets encapsulés sortants.

**19.** Procédé selon la revendication 11, comprenant en outre :

l'extraction de sélecteurs à partir d'un paquet respectif des paquets encapsulés entrants.

**20.** Procédé selon la revendication 19, les sélecteurs comprenant une adresse IP de destination, un protocole, un index de politique de sécurité et un port d'interface.

**21.** Procédé selon la revendication 20, le protocole étant un protocole de transport.

**22.** Procédé selon la revendication 19, comprenant en outre :

la recherche dans une base de données des associations de sécurité afin d'obtenir une association de sécurité pour le paquet respectif des paquets encapsulés entrants sur la base des sélecteurs extraits.

**23.** Procédé selon la revendication 22, la recherche dans la base de données des associations de sécurité comprenant :

le hachage des sélecteurs extraits afin d'obtenir une valeur de clé de hachage ; et
la réalisation d'une recherche linéaire dans la base de données des associations de sécurité en utilisant la valeur de clé de hachage.

**24.** Procédé selon la revendication 22, comprenant en outre :

l'insertion d'informations cryptographiques dans l'en-tête d'objet de paquet du paquet respectif des paquets encapsulés entrants sur la base de l'association de sécurité pour le paquet respectif des paquets encapsulés entrants.

**25.** Procédé selon la revendication 11, comprenant en outre :

le décryptage d'un paquet respectif des paquets encapsulés entrants ; et
la vérification que le paquet respectif des paquets encapsulés entrants possède des champs qui sont remplis de données lesquelles se trouvent dans des limites spécifiées.

26. Procédé selon la revendication 11, comprenant en outre :

la fragmentation d'un paquet respectif des paquets encapsulés si une taille du paquet respectif des paquets encapsulés dépasse une taille unitaire de transmission maximum associée au paquet respectif des paquets encapsulés.

27. Procédé selon la revendication 11, comprenant en outre :

le décryptage d'un paquet respectif des paquets encapsulés entrants ;
l'extraction de sélecteurs à partir du paquet respectif des paquets encapsulés entrants ; et
l'obtention d'un index de politique de sécurité à partir d'une base de données de politiques de sécurité pour le paquet respectif des paquets encapsulés entrants sur la base des sélecteurs extraits.

28. Procédé selon la revendication 27, les sélecteurs comprenant une adresse IP d'origine, une adresse IP de destination, un protocole, un port d'origine, un port de destination et un port d'interface.

29. Procédé selon la revendication 28, le protocole étant un protocole de transport.

30. Procédé selon la revendication 10, comprenant en outre :

la saisie d'un paquet respectif des paquets encapsulés vers un processeur de système, sur la base d'une balise au moins des balises de routage.

31. Système de traitement de paquets IPSec comprenant :

une pluralité de modules de transformation (104, 108, 112, 118, 122, 124, 126, 128, 136) qui sont couplés l'un à l'autre suivant une configuration en série, chacun ayant une fonction individuelle spécifique, et sont configurés pour recevoir un flux sériel de paquets qui sont chacun encapsulés avec un en-tête de paquet, des modules respectifs de la pluralité de modules de transformation étant configurés en outre pour recevoir les paquets encapsulés en parallèle et pour traiter les paquets encapsulés en parallèle indépendamment des autres modules de la pluralité de modules de transformation, sur la base des informations contenues dans les en-têtes de paquets.

32. Système de traitement de paquets IPSec selon la revendication 31, un module de la pluralité de modules de transformation comprenant :

une pluralité de processeurs parallèles (605) ;
un démultiplexeur (600) qui est configuré pour recevoir le flux sériel de paquets, d'identifier une séquence des paquets reçus et fournir les paquets à la pluralité de processeurs parallèles ; et
un multiplexeur (610) qui est configuré pour recevoir des paquets traités provenant de la pluralité de processeurs parallèles et pour produire les paquets traités suivant la séquence identifiée par le démultiplexeur.

33. Système de traitement de paquets IPSec selon la revendication 32, le démultiplexeur (600) étant configuré en outre pour attribuer un identifiant de séquence à des paquets apparentés qui spécifie un ordonnancement des paquets apparentés ; et
cas dans lequel le multiplexeur (610) est configuré en outre pour effectuer l'ordonnancement des paquets traités sur la base des identifiants de séquence attribués aux paquets

34. Système de traitement de paquets IPSec selon la revendication 33, le démultiplexeur (600) étant configuré en outre pour effectuer la classification des paquets de sorte à identifier les paquets apparentés et à attribuer un identifiant de flux à des paquets apparentés sur la base des classifications des paquets.

35. Système de traitement de paquets IPSec selon la revendication 34, le démultiplexeur (600) étant configuré en outre pour évaluer une adresse d'origine, une adresse de destination et un protocole associés aux paquets, et à attribuer un identifiant de flux à des paquets apparentés sur la base de l'adresse d'origine, de l'adresse de destination et du protocole associés aux paquets.

**36.** Système de traitement de paquets IPSec selon la revendication 34, le démultiplexeur (600) étant configuré en outre pour évaluer une adresse de destination, un index des paramètres de sécurité et un protocole associés aux paquets, et à attribuer un identifiant de flux à des paquets apparentés sur la base de l'adresse de destination, de l'index des paramètres de sécurité et du protocole associés aux paquets.

**37.** Produit de programme informatique destiné à traiter des paquets IPSec comprenant :

un support de programme lisible par ordinateur comportant un code de programme lisible par ordinateur qui y est intégré ;

un code de programme lisible par ordinateur configuré pour recevoir (500) les paquets ;

un code de programme lisible par ordinateur configuré pour encapsuler (505) chacun des paquets, qui n'a pas d'en-tête de paquet, avec un en-tête de paquet ;

un code de programme lisible par ordinateur configuré pour traiter (510) les paquets encapsulés, sur la base des informations contenues dans les en-têtes de paquets, en utilisant une pluralité de modules de transformation (104, 108, 112, 118, 122, 124, 126, 128, 136) qui sont couplés l'un à l'autre suivant une configuration en série et chacun ayant une fonction individuelle spécifique ; et

un code de programme lisible par ordinateur configuré pour fournir les paquets encapsulés en parallèle à des modules respectifs de la pluralité de modules de transformation, cas dans lequel le code de programme lisible par ordinateur, configuré pour traiter les paquets encapsulés, est configuré pour utiliser lesdits modules respectifs de la pluralité de modules de transformation afin de traiter les paquets encapsulés en parallèle indépendamment des autres modules de la pluralité de modules de transformation.

**38.** Produit de programme informatique selon la revendication 37, comprenant en outre :

un code de programme lisible par ordinateur configuré pour mettre à jour des balises de routage dans un en-tête respectif des en-têtes de paquet afin d'indiquer si un paquet respectif des paquets devrait être traité par la pluralité de modules de transformation, acheminé à travers la pluralité de modules de transformation sans être transformé, ou saisi par un processeur de système.

**39.** Produit de programme informatique selon la revendication 38, comprenant en outre :

un code de programme lisible par ordinateur configuré pour saisir un paquet respectif des paquets encapsulés vers un processeur de système, sur la base d'une balise au moins des balises de routage.

**40.** Produit de programme informatique selon la revendication 37, comprenant en outre :

un code de programme lisible par ordinateur configuré pour multiplexer un flux entrant de paquets encapsulés avec un flux sortant de paquets encapsulés pour en faire un flux sériel de paquets encapsulés.

**41.** Produit de programme informatique selon la revendication 40, comprenant en outre :

un code de programme lisible par ordinateur configuré pour vérifier qu'un paquet respectif des paquets encapsulés possède des champs qui sont remplis de données lesquelles se trouvent dans des limites spécifiées.

**42.** Produit de programme informatique selon la revendication 40, comprenant en outre :

un code de programme lisible par ordinateur configuré pour extraire des sélecteurs à partir d'un paquet respectif des paquets encapsulés sortants ; et

un code de programme lisible par ordinateur configuré pour obtenir un index de politique de sécurité à partir d'une base de données de politiques de sécurité pour le paquet respectif des paquets encapsulés sortants sur la base des sélecteurs extraits.

**43.** Produit de programme informatique selon la revendication 42, les sélecteurs comprenant une adresse IP d'origine, une adresse IP de destination, un protocole, un port d'origine et un port de destination.

**44.** Produit de programme informatique selon la revendication 43, le protocole étant un protocole de transport.

**45.** Produit de programme informatique selon la revendication 42, comprenant en outre :

un code de programme lisible par ordinateur configuré pour effectuer une recherche dans une base de données des associations de sécurité afin d'obtenir une association de sécurité pour le paquet respectif des paquets encapsulés sortants sur la base des sélecteurs extraits et de l'index de politique de sécurité.

**46.** Produit de programme informatique selon la revendication 45, le code de programme lisible par ordinateur étant configuré pour effectuer une recherche dans la base de données des associations de sécurité comprenant :

un code de programme lisible par ordinateur configuré pour effectuer le hachage des sélecteurs extraits et de l'index de politique de sécurité afin d'obtenir une valeur de clé de hachage ; et
un code de programme lisible par ordinateur configuré pour effectuer une recherche linéaire dans la base de données des associations de sécurité en utilisant la valeur de clé de hachage.

**47.** Produit de programme informatique selon la revendication 45, comprenant en outre :

un code de programme lisible par ordinateur configuré pour insérer des informations cryptographiques dans l'en-tête de paquet du paquet respectif des paquets encapsulés sortants sur la base de l'association de sécurité pour le paquet respectif des paquets encapsulés sortants.

**48.** Produit de programme informatique selon la revendication 40, comprenant en outre :

un code de programme lisible par ordinateur configuré pour extraire des sélecteurs à partir d'un paquet respectif des paquets encapsulés entrants.

**49.** Produit de programme informatique selon la revendication 48, les sélecteurs comprenant une adresse IP de destination, un protocole, un index de politique de sécurité et un port d'interface.

**50.** Produit de programme informatique selon la revendication 49, le protocole étant un protocole de transport.

**51.** Produit de programme informatique selon la revendication 48, comprenant en outre :

un code de programme lisible par ordinateur configuré pour effectuer une recherche dans une base de données des associations de sécurité afin d'obtenir une association de sécurité pour le paquet respectif des paquets encapsulés entrants sur la base des sélecteurs extraits.

**52.** Produit de programme informatique selon la revendication 51, le code de programme lisible par ordinateur étant configuré pour effectuer une recherche dans la base de données des associations de sécurité comprenant :

un code de programme lisible par ordinateur configuré pour effectuer le hachage des sélecteurs extraits afin d'obtenir une valeur de clé de hachage ; et
un code de programme lisible par ordinateur configuré pour effectuer une recherche linéaire dans la base de données des associations de sécurité en utilisant la valeur de clé de hachage.

**53.** Produit de programme informatique selon la revendication 51, comprenant en outre :

un code de programme lisible par ordinateur configuré pour insérer des informations cryptographiques dans l'en-tête de paquet du paquet respectif des paquets encapsulés entrants sur la base de l'association de sécurité pour le paquet respectif des paquets encapsulés entrants.

**54.** Produit de programme informatique selon la revendication 40, comprenant en outre :

un code de programme lisible par ordinateur configuré pour décrypter un paquet respectif des paquets encapsulés entrants ; et
un code de programme lisible par ordinateur configuré pour vérifier que le paquet respectif des paquets encapsulés entrants possède des champs qui sont remplis de données lesquelles se trouvent dans des limites spécifiées.

**55.** Produit de programme informatique selon la revendication 40, comprenant en outre :

un code de programme lisible par ordinateur configuré pour fragmenter un paquet respectif des paquets encapsulés si une taille du paquet respectif des paquets encapsulés dépasse une taille unitaire de transmission maximum associée au paquet respectif des paquets encapsulés.

**56.** Produit de programme informatique selon la revendication 40, comprenant en outre :

un code de programme lisible par ordinateur configuré pour décrypter un paquet respectif des paquets encapsulés entrants ;
un code de programme lisible par ordinateur configuré pour extraire des sélecteurs à partir du paquet respectif des paquets encapsulés entrants ; et
un code de programme lisible par ordinateur configuré pour obtenir un index de politique de sécurité à partir d'une base de données de politiques de sécurité pour le paquet respectif des paquets encapsulés entrants sur la base des sélecteurs extraits.

**57.** Produit de programme informatique selon la revendication 56, les sélecteurs comprenant une adresse IP d'origine, une adresse IP de destination, un protocole, un port d'origine, un port de destination et un port d'interface.

**58.** Produit de programme informatique selon la revendication 57, le protocole étant un protocole de transport.

FIG. 1

*200*

| |
|---|
| Pipeline Processing Header (5 to 9 words) |
| User Words (0 - 26/22 (OB/IB) words) |
| Crypto Header (0 - 19 words) |
| Data (IP packet) |

Packet-Object Header

205

210

215

220

## FIG. 2

Begin

Receive packets for transform processing —500

Encapsulate each packet that does not have a packet object header with a packet object header —505

Independently process the encapsulated packets based on information contained in the packet object headers using the pipelined transform modules —510

Remove packet object header —515

End

## FIG. 5

| SEn (31) | Rsvd (30:26) | Flow ID (25:16) | Rsvd (15:10) | PFSN (9:0) |
|---|---|---|---|---|
| Flags (63:32) | | | | |
| Flags (31:0) | | | | |

| Version (31:29) | Rsvd (28:26) | Upper SAD Idx (25:24) | Rsvd (28:26) | Header Length (20:16) | PO Length (15:0) |
|---|---|---|---|---|---|
| MTU (31:18) | | | | SAD Index (17:0) | |
| Rsvd (31:29) | SPD Index (31:16) | | Rpadlen (15:8) | Port Selector (7:0) | |
| User Bytes (31:0) [0-26 words per packet object] | | | | | |

## FIG. 3

| SEn (31) | Rsvd (30:26) | Flow ID (25:16) | Rsvd (15:10) | PFSN (9:0) |
|---|---|---|---|---|
| Flags (63:32) | | | | |
| Flags (31:0) | | | | |

| Version (31:29) | Rsvd (28:26) | Upper SAD Idx (25:21) | TLEN (31:29) | Header Length (20:16) | PO Length (15:0) |
|---|---|---|---|---|---|
| MTU (31:18) | | | | SAD Index (17:0) | |
| IPsec Protocol (31:24) SPD Idx (15:8) | IPsec Pad Len (23:16) SPD Idx (7:0) | | Rsvd (15:8) | Port Selector (7:0) | |
| Transform Record 0 (31:16) | | | Transform Record 1 (15:0) | | |
| Transform Record 2 (31:16) | | | Transform Record 3 (15:0) | | |
| Transform Record 4 (31:16) | | | Transform Record 5 (15:0) | | |
| Transform Record 6 (31:16) | | | Transform Record 7 (15:0) | | |
| User Bytes (31:0) [0-26 words per packet object] | | | | | |

## FIG. 4

*FIG. 6*

30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0105086 A
- US 09845432 B
- US 09999647 B

### Non-patent literature cited in the description

- **Wu L et al.** *Crypto Maniac: a fast flexible architecture for secure communication,* 30 June 2001, ISBN 0-7695-1162-7, 104-113